# EUROPEAN PATENT APPLICATION

(11) **EP 1 775 592 A1**
(43) Date of publication of application: **18.04.2007**
(21) Application number: 05765718.1
(22) Date of filing: 12.07.2005
(51) Int. Cl.: G01N 35/08, G01N 1/00, G01N 1/10, G01N 31/20, G01N 33/52, G01N 37/00

(54) **ANALYZER, METHOD FOR SPECIFYING REACTION VESSEL IN ANALYZER, AND ANALYTICAL APPARATUS**

(30) Priority: 12.07.2004 JP 2004205129; 12.07.2004 JP 2004205130; 12.07.2004 JP 2004205131
(71) Applicant: Arkray, Inc., Kyoto-shi, Kyoto 601-8045 (JP)
(72) Inventor: FUJIMOTO, Koji, ARKRAY Inc., Kyoto-shi, Kyoto 6018045 (JP); HORI, Masaki, ARKRAY Inc., Kyoto-shi, Kyoto 6018045 (JP)
(74) Representative: Pluckrose, Anthony William
(86) International application number: PCT/JP2005/012828
(87) International publication number: WO 2006/006591

(57) **Abstract**

The present invention relates to a technique for determining the position of each of reaction vessels (56) for retaining reaction liquid of a sample and a reagent in analytical instrument (Y) provided with a plurality of reaction vessels (56). The analytical instrument (Y) includes a reference portion (66) for enabling the determination of the position of a particular portion of the analytical instrument (Y). The reference portion (66) is optically detected and utilized as the basis for determining the position of each reaction vessel (56).

## Description

### TECHNICAL FIELD

The present invention relates to a technique for determining the position of a target reaction vessel in an analytical instrument provided with reaction vessels.

### BACKGROUND ART

For example, in a method to analyze a sample, reaction liquid obtained by the reaction of a sample and a reagent is analyzed by an optical technique or an electrochemical technique. In performing the sample analysis by these techniques, an analytical instrument for providing a reaction field is used. The analytical instrument is mounted, in use, to an analytical apparatus for analyzing the reaction liquid. To analyze a slight amount of sample, a so-called microdevice formed with a small flow path is used as the analytical instrument.

For instance, a microdevice may be in the form of a circular plate as a whole and formed with a plurality of reaction vessels arranged on a common circle (See Patent Document 1, for example) . By using such a microdevice, it is possible to perform analysis of a single item (measurement target component) with respect to different samples or analysis of a plurality of items with respect to a single sample. In the analytical apparatus, on the other hand, it is necessary to find which sample or which analysis target item each of the reaction vessels corresponds to.

In the analytical apparatus, to which the microdevice is to be mounted, the sample analysis is not performed simultaneously with respect to the plurality of reaction vessels, because, for the purpose of reduction in size and manufacturing cost, the analytical apparatus generally includes only a single analysis mechanism fixed to the apparatus. In this case, with the microdevice mounted on a rotation table of the analytical apparatus, the analysis mechanism performs sample analysis individually with respect to each of the reaction vessels while rotating the microdevice together with the rotation table to change the position of the reaction vessels. In this case, the microdevice is mounted with positioned relative to the rotation table, and the analytical apparatus determines the position of each reaction vessel of the microdevice based on a mark formed at the rotation table or a rotation shaft connected to the rotation table (See Patent Documents 2, 3, for example)

In using a small analytical instrument such as amicrodevice, high positioning accuracy is demanded, because the reaction vessels are small. Further, in using a small analytical instrument such as a microdevice, the dimensional tolerance of the analytical instrument or error in positioning the analytical instrument relative to the rotation table has a large influence on the determination of the position of a reaction vessel, so that the difference between the actual position of the reaction vessel and the detected position of the reaction vessel is likely to become large. Also in view of this point, high positioning accuracy is demanded. However, to achieve high positioning accuracy, an expensive detection mechanism is needed, which is generally complicated and large. Therefore, even when the analytical instrument to be used is reduced in size, the analytical apparatus cannot be reduced in size.
Patent Document 1: JP-A-H10-2875
Patent Document 2: JP-A-H11-233594
Patent Document 3: JP-A-2002-284342

### DISCLOSURE OF THE INVENTION

An object of the present invention is to make it possible to determine the position of a target reaction vessel in an analytical instrument provided with a plurality of reaction vessels while employing a structure which is simple and can be provided at a low cost.

According to a first aspect of the present invention, there is provided an analytical instrument comprising a plurality of reaction vessels for retaining reaction liquid of a sample and a reagent. The analytical instrument further comprises a reference portion for enabling determination of the position of a particular portion of the analytical instrument.

For instance, the reaction vessels are arranged on a common circle, and the reference portion is arranged on the same circle as the reaction vessels. In this case, the reference portion is formed between adjacent ones of the reaction vessels on the circle and includes a plurality of linear portions spaced from each other in the circumferential direction. For instance, the linear portions are equally or generally equally spaced fromeach other. Preferably, in this case, the distance between the reaction vessels is a non-integer multiple of the distance between the linear portions.

For instance, each of the linear portions is a groove. For instance, the groove may be V-shaped in cross section taken along the circle. The cross section of each of the grooves is not limited to V-shaped one but may be rectangular or semicircular, for example. The linear portion may be provided as a projection. In this case, the projection may be V-shaped, rectangular or semicircular in the cross section taken along the circumferential direction.

The reference portion may have reflectivity which is different from the reflectivity of other portions. For instance, the reference portion is made of material whose reflectivity is higher than reflectivity of other portions.

For instance, the reference portion includes at least a projection or a recess. When the analytical instrument is held, in use, on a rotation table of an analytical apparatus, the reference portion is utilized for positioning the analytical instrument relative to the rotation table.

The analytical instrument according to the present invention may further comprise a recognizing portion utilized for determining the position of a target reaction vessel and provided correspondingly to the reaction vessel. For instance, the recognizing portion includes a projection or a recess having a different shape from the reference portion.

According to a second aspect of the present invention, there is provided a reaction vessel position determining method for an analytical instrument for determining the position of each of a plurality of reaction vessels provided in the analytical instrument for retaining reaction liquid of a sample and a reagent. The method comprises providing the analytical instrument with a reference portion for enabling determination of the position of a particular portion of the analytical instrument, and determining the position of each of the reaction vessels by detecting the reference portion.

In a preferred embodiment, in an analytical instrument in which the reaction vessels are arranged on a common circle and designed to be suitable for analysis of the sample by an optical method, the reference portion is provided on the same circle with the reaction vessels, and the reference portion is detected by photometry means used for the analysis of the sample by utilizing the analytical instrument. In this case, the detection of the reference portion is performed by irradiating the analytical instrument with light while moving the photometry means relative to the analytical instrument along the circle on which the reaction vessels are arranged, and receiving the light traveling from the analytical instrument at the photometry means.

In the reaction vessel position determining method for an analytical instrument according to the present invention, at least one recess or projection is provided as the reference portion, and the detection of the reference portion is performed by receiving, at the photometry means, the light transmitted through the analytical instrument when the analytical instrument is irradiated with light. For instance, a plurality of linear grooves are provided as the reference portion.

In the reaction vessel position determining method for an analytical instrument according to the present invention, laser beam is used as the light to irradiate the analytical instrument. Preferably, in this case, the position of a target reaction vessel is determined based on change of amount of light reflection obtained by irradiating the analytical instrument with light while rotating the analytical instrument and receiving the reflected light. For instance, the reference portion is made to have reflectivity which is different from the reflectivity of other portions.

Preferably, when the analytical instrument includes the reaction vessels, a flow path for moving a sample by causing capillary force to act on the sample, an exhaust port for exhausting gas from the flow path, and a sealing member closing the exhaust port and capable of being perforated by irradiation of laser beam, a light source for perforating the sealing member is used as the light source for irradiating the reference portion with laser beam. In this case, the light source is so controlled that output of laser beam emitted from the light source be larger in perforating the sealing member than in detecting the reference portion.

In the reaction vessel position determining method for an analytical instrument according to the present invention, the position of a target reaction vessel is determined based on change of amount of light reflection obtained by irradiating the analytical instrument with light while rotating the analytical instrument and receiving the reflected light. In this case, the analytical instrument to be used may be in the form of a circular plate as a whole and includes a periphery provided with the reference portion and a recognizing portion utilized for determining the position of a target reaction vessel and provided correspondingly to the reaction vessel. The position of each of the reaction vessels may be determined based on light reflection from the analytical instrument when the analytical instrument is irradiated with light traveling from side. For instance, the irradiation of the analytical instrument with light and receiving of light from the analytical instrument are performed by using a reflective photosensor.

The reflective photosensor includes a light emitting portion and a light receiving portion. Preferably, for example, the light emitting portion and the light receiving portion are so arranged that the amount of light reflection becomes maximum when light is reflected at a projection of the analytical instrument.

According to a third aspect of the present invention, there is provided an analytical apparatus for analyzing a sample using an analytical instrument provided with a plurality of reaction vessels for retaining reaction liquid of a sample and a reagent. The analytical apparatus is designed to perform sample analysis with respect to each of the reaction vessels. The analytical apparatus comprises photometry means for irradiating each of the reaction vessels with light and receiving light traveling from the reaction vessel upon the irradiation, and detection means for detecting a reference portion provided in the analytical instrument for enabling determination of the position of a particular portion of the analytical instrument. The detection of the reference portion is performed based on the result of light reception at the photometry means when the analytical instrument is irradiated with light by the photometry means.

When the analytical instrument to be used is so designed that the reaction vessels and the reference portion are arranged on a common circle and that sample analysis is to be performed with respect to each of the reaction vessels, the analytical apparatus further includes a controller for controlling the operation to rotate the photometry means relative to the analytical instrument along the circle on which the reaction vessels are arranged. Preferably, in this case, the detection means detects the reference portion based on the result of light reception at the photometry means when the analytical instrument is irradiated with light by the photometry means while the photometry means is rotated relative to the analytical instrument.

When the analytical instrument is so designed as to perform analysis of the sample by an optical method utilizing each of the reaction vessels, the photometry means to be used is designed to perform photometry with respect to each of the reaction vessels. In this case, for instance, the photometry means is designed to receive light transmitted through the analytical instrument when the analytical instrument is irradiated with light.

The photometry means may be designed to irradiate the analytical instrument with laser beam and receive reflected light from the analytical instrument. In this case, the photometry means is designed to include a semiconductor laser apparatus which includes a laser diode for irradiating the analytical instrument with laser beam and a photodiode for receiving reflected light from the analytical instrument.

As the photodiode, use may be made of one incorporated in the semiconductor laser apparatus for monitoring the output of the laser diode. Preferably, the photodiode includes a light receiving surface spreading in a direction crossing the optical axis of laser beam emitted from the semiconductor laser apparatus and is spaced from the laser diode in a direction perpendicular to the optical axis.

When the analytical instrument to be used includes the reaction vessels, a flow path for moving a sample by causing capillary force to act on the sample, an exhaust port for exhausting gas from the flow path, and a sealing member closing the exhaust port and capable of being perforated by irradiation of laser beam, the analytical apparatus further includes a controller for controlling the operation of the photometry means. For instance, the controller is designed to control the photometry means so that laser beam from the photometry means impinges on the sealing member to perforate the sealing member and cause the flow path to communicate with outside. Preferably, the controller controls the photometry means so that output of laser beam emitted from the photometry means be larger in perforating the sealing member than in detecting the reference portion.

When the analytical instrument to be used is in the form of a circular plate as a whole and includes a periphery provided with the reference portion and a recognizing portion utilized for determining the position of a target reaction vessel and provided correspondingly to the reaction vessel, the analytical apparatus includes an optical sensor for irradiating the periphery of the analytical instrument with light from side and receiving reflected light from the periphery of the analytical instrument.

For instance, as the optical sensor, use may be made of a reflective photosensor.

### BRIEF DESCRIPTION OF THE DRAWINGS

Fig. 1 is a perspective view showing a principal portion of an analytical apparatus and a microdevice according to a first embodiment of the present invention.
Fig. 2 is a sectional view showing the state in which the microdevice is mounted to a mount portion of the analytical apparatus shown in Fig. 1.
Fig. 3 is a sectional view showing portions around the mount portion in the state in which the microdevice is mounted to the mount portion.
Fig. 4 is an overall perspective view showing a microdevice according to the present invention.
Fig. 5 is an exploded perspective view of the microdevice shown in Fig. 4.
Fig. 6A is a sectional view taken along lines VIa-VIa in Fig. 4, whereas Fig. 6B is a sectional view taken along lines VIb-VIb in Fig. 4.
Fig. 7 is a plan view of a substrate of the microdevice shown in Fig. 4.
Fig. 8 is a plan view of a cover of the microdevice shown in Fig. 4.
Fig. 9 is a sectional view showing a principal portion for describing a reference portion of the microdevice shown in Fig. 4.
Fig. 10 is a graph showing the change of transmittance when the reference portion and the neighboring portion of the microdevice shown in Fig. 4 is irradiated with light.
Fig. 11 is a block diagram showing the structure of part of the analytical apparatus shown in Fig. 1.
Fig. 12 schematically illustrates the movement of a sample in flow paths of the microdevice shown in Fig. 4.
Fig. 13 is a sectional view corresponding to Fig. 9, showing a principal portion of another example of reference portion of the microdevice.
Fig. 14 is a sectional view corresponding to Fig. 9, showing a principal portion of still another example of reference portion of the microdevice.
Fig. 15 is an exploded perspective view showing a microdevice according to a second embodiment of the present invention.
Fig. 16 is a sectional view corresponding to Fig. 3, showing portions around the mount portion in the state in which the microdevice shown in Fig. 15 is mounted to the mount portion of the analytical apparatus.
Fig. 17 is a sectional view showing a semiconductor laser apparatus used in the analytical apparatus.
Fig. 18 is a sectional view showing another example of semiconductor laser apparatus.
Fig. 19 is an exploded perspective view showing the schematic structure of an analytical apparatus and a microdevice according to a third embodiment of the present invention.
Fig. 20 is a sectional view corresponding to Fig. 3, showing the state in which the microdevice is mounted to the mount portion of the analytical apparatus shown in Fig. 19.
Fig. 21 is an overall perspective view of the microdevice shown in Fig. 19.
Fig. 22 is a perspective view of the microdevice shown in Fig. 21 as viewed from the reverse surface side.
Fig. 23 is an exploded perspective view of the microdevice shown in Fig. 21.
Fig. 24 is a plan view of the principal portion of a substrate of the microdevice shown in Fig. 21.
Fig. 25 is a graph showing an example of amount of light reflection when the substrate shown in Fig. 24 is irradiated with light.

### BEST MODE FOR CARRYING OUT THE INVENTION

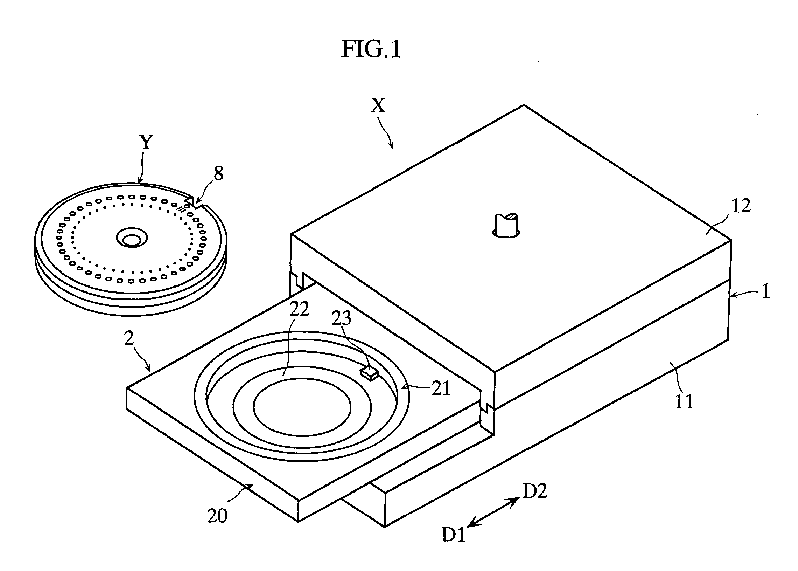

Figs. 1-3 show a principal portion of an analytical apparatus X which is used for analyzing a sample with a microdevice Y (analytical instrument) formed with a minute flow path mounted to the apparatus. The analytical apparatus includes a housing 1, a mount portion 2, a photometry mechanism 3A, 3B and a hole making mechanism 4A, 4B.

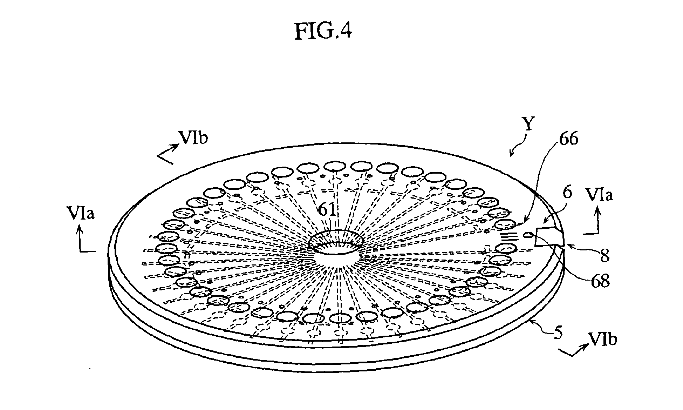

As shown in Figs. 4-6, the microdevice Y, which serves to provide a reaction field, is formed by bonding a cover 6 to a substrate 5 and in the form of a circular plate as a whole. In addition to the substrate 5 and the cover 6, the microdevice further includes an adhesive layer 7A, a separation film 7B and a positioning portion 8.

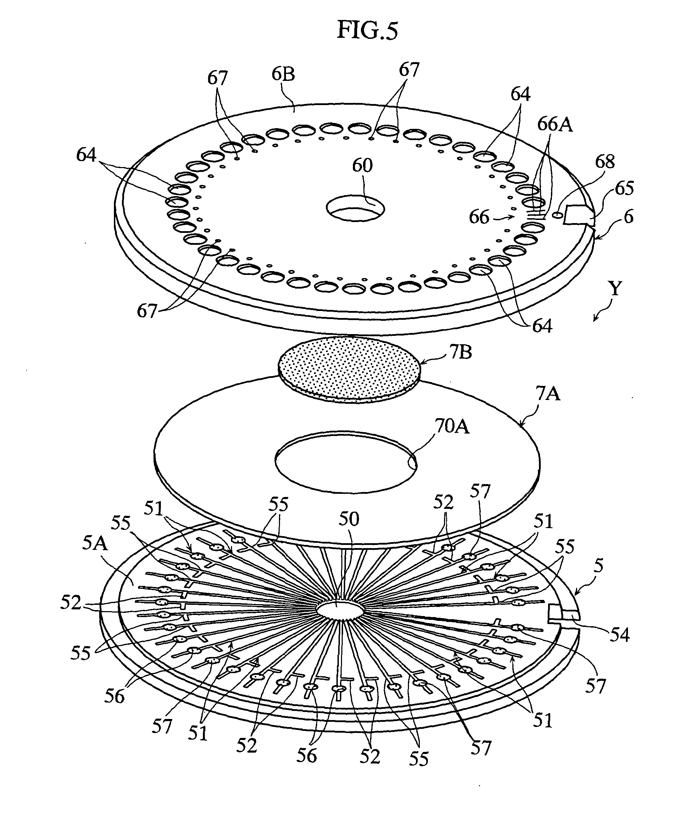

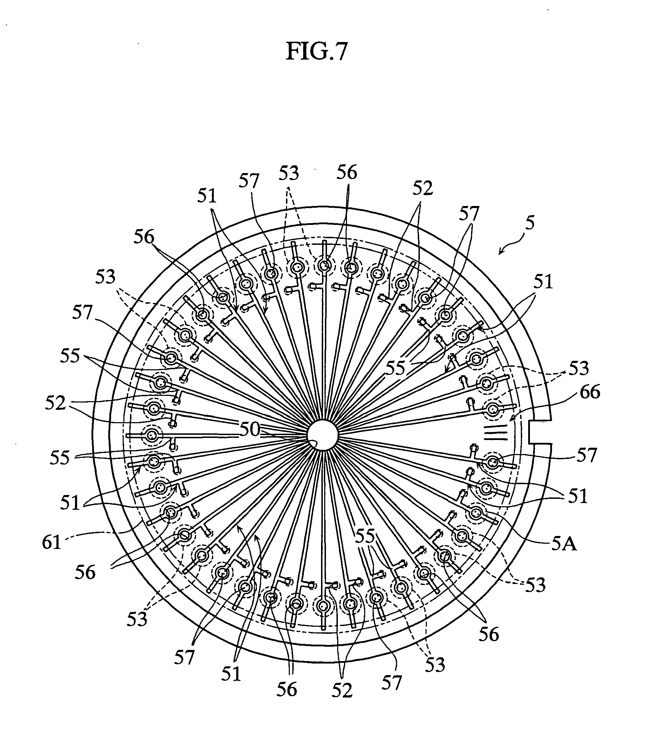

As shown in Figs. 5-7, the substrate 5 is in the form of a circular transparent plate as a whole. The substrate 5 includes a liquid receiving portion 50, a plurality of flow paths 51, a plurality of branched flow paths 52, a plurality of recesses 53 and a cutout 54.

The liquid receiving portion 50 serves to retain a sample to be introduced into each of the flow paths 51 and comprises a circular recess formed at the center of the substrate 5.

The flow paths 51, which serve to move a sample, are formed on the upper surface 5A of the substrate 5 to communicate with the liquid receiving portion 50. Each of the flow paths 51 communicates with a sample introduction port 60 of the cover 6, which will be described later, through the liquid receiving portion 50 and is basically in the form of a straight line extending from the center toward the circle. The flow paths 51 are equal in length to each other and arranged radially. Each of the flow paths 51 includes a branch portion 55 and a reaction vessel 56.

Each of the branch portions 55 is set as a boundary between the flow path 51 and the branched flow path 52 and provided in the flow path 51 at a portion which is closer to the liquid receiving portion 50 than the reaction vessel 56 is and which is as close to the reaction vessel 56 as possible.

The reaction vessel 56 is provided at each of the flow paths 51, so that a plurality of reaction vessels 56 are provided in the substrate 5. The reaction vessels 56 are equal to each other in distance from the liquid receiving portion 50 and arranged on the substrate 5 at regular intervals along a common circle (except for the portion where a reference portion 66 is formed, which will be described later). A reagent portion 57 is provided in each of the reaction vessels 56. However, the reagent portion 57 does not necessarily need to be provided in all the reaction vessels 56. For instance, the reagent portion may not be provided in the flow path to be utilized for correcting the influence of the color of a sample.

The reagent portion 57 is in a solid state which is soluble when a sample is supplied thereto and develops a color upon reaction with a measurement target component contained in the sample. In this embodiment, a plurality of kinds of reagent portions 57 having different components or compositions are prepared so that a plurality of items can be measured at the microdevice Y.

Each of the branched flow paths 52 serves to move a sample to a portion adjacent the reaction vessel 56. As noted before, the branched portion 55 is provided adjacent to the reaction vessel 56. Therefore, by introducing the sample into the branched flow path 52, the sample can be moved very close to the reaction vessel 56.

The recesses 53 serve to transmit light toward the lower surface 5B side of the substrate 5 when light is directed to the reaction vessels 56 from the upper surface 5A side of the substrate 5, which will be described later. The recesses 53 are provided on the lower surface 5B of the substrate 5 at locations corresponding to the reaction vessels 56. Accordingly, the recesses 53 are arranged at the periphery of the substrate 5 on a common circle.

The cutout 54 provides the positioning portion 8. The cutout extends from the periphery of the substrate 5 toward the center of the substrate 5 and vertically penetrates the substrate.

The substrate 5 having the above-described structure may be formed by resin molding using acrylic resin such as polymethyl methacrylate (PMMA) or transparent resin such as polydimethylsiloxane (PDMS). By appropriately designing the shape of the die, the liquid receiving portion 50, the flow paths 51, the branched flow paths 52, the recesses 53 and the cutout 54 can be formed simultaneously at the time of the resin molding.

As shown in Figs. 5, 6A, 6B and 8, the cover 6 is in the form of a transparent circular plate and includes a sample introduction port 60, a common flow path 61, a plurality of first gas exhaust ports 62, a second gas exhaust port 63, a plurality of recesses 64, a cutout 65 and a reference portion 66.

The sample introduction port 60 is used for introducing a sample and comprises a through-hole. The sample introduction port 60 is provided at the center of the cover 6 and directly above the liquid receiving portion 50 of the substrate 5.

The common flow path 61 is utilized for guiding gas to the second gas exhaust port 63 in discharging gas from the flow paths 51. The common flow path 61 comprises an annular groove formed at the periphery of the lower surface 6A of the cover 6. The common flow path 61 communicates with the flow paths 51 of the substrate 5.

Each of the first gas exhaust ports 62 is utilized for discharging gas from the flow path 51 and comprises a through-hole. The first gas exhaust ports 62 are respectively provided directly above the branched flow paths 52 of the substrate 5. Accordingly, the first gas exhaust ports 62 are arranged on a common circle. The upper opening of each of the first gas exhaust ports 62 is closed by a sealing member 67. The sealing member 67 may be made of metal such as aluminum or resin. The sealing member 67 is fixed to the cover 6 by using an adhesive or by fusion welding, for example.

The second gas exhaust port 63 is a through-hole communicating with the common flow path 61. The upper opening of the second gas exhaust port 63 is closed by a sealing member 68.

The sealing member 68 melts and forms a hole when irradiated with a laser beam by a semiconductor laser apparatus 4A of a hole forming mechanism 4A, 4B of the analytical apparatus X, which will be described later. For instance, the sealing member 68 is so designed as to form a hole when irradiated with a laser beam with a spot diameter of 50 to 300 µm and an output of 15 to 15 to 50 mW for 0.5 to 10 seconds. For instance, such a sealing member 68 may be made of a thermoplastic resin containing light absorbing particles and heat retaining filler and have a thickness of 5 to 100 µm. As the thermoplastic resin, use may be made of ethylene-vinyl acetate copolymer, for example. As the light absorbing particles, use may be made of particles having an average particle size of 0.1 to 30 µm, and the material is selected depending on the wavelength of the laser beam. As the heat retaining filler, use may be made of nickel powder, for example. The sealing member 68 is fixed to the substrate 5 by using an adhesive or by fusion welding, for example.

The recesses 64 are provided for directing light to the reaction vessels 56 form the upper surface 6B side of the cover 6, as will be described later. The recesses 64 are formed on the upper surface 6B of the cover 6 at locations directly above the reaction vessels 56. Accordingly, the recesses 64 are arranged at the periphery of the cover 6 on a common circle.

The cutout 65 provides the positioning portion 8 along with the cutout 54 of the substrate 5 and is formed at a location corresponding to the cutout 54 of the substrate 5 to penetrate vertically.

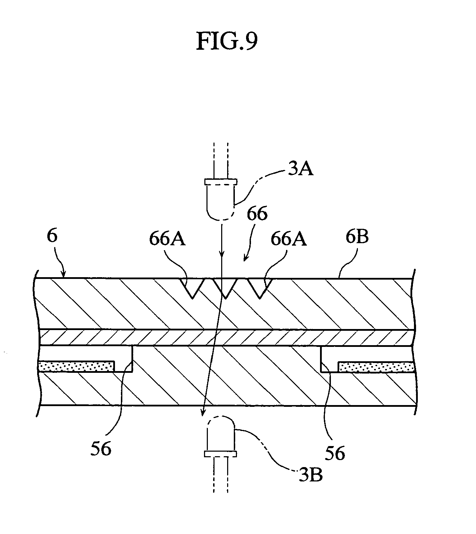

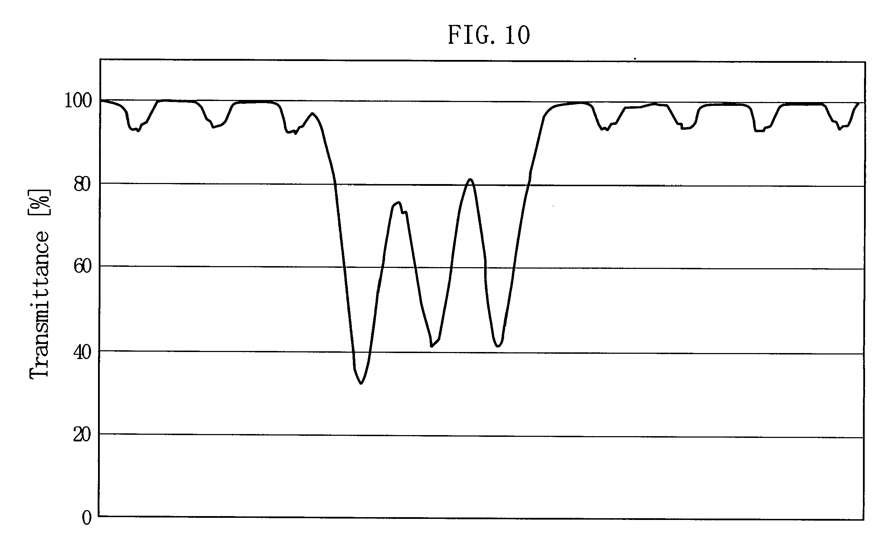

The reference portion 66 is utilized for determining the positions of the reaction vessels 56. As viewed in the thickness direction of the microdevice Y, the reference portion is formed on the same circle as the reaction vessels 56. The reference portion 66 includes three grooves 66A. The grooves 66A extend radially of the cover 6 and are equally spaced from each other circumferentially. As shown in Fig. 9, each of the grooves is V-shaped in cross section taken along the circle on which the reaction vessels 56 are arranged. The distance between adjacent reaction vessels 56 is set to a non-integer multiple of the distance between the grooves 66A, for example. When light traveling from the upper surface 6B side of the cover 6 impinges on the grooves 66A, the light is refracted, so that the amount of light received by a light receiving portion 3B of the photometry mechanism 3A, 3B, which will be described later, is reduced. Therefore, the grooves 66A can be discriminated from the reaction vessels 56. As will be understood from Fig. 10, since the reference portion 66 includes three grooves 66A, the light receiving portion 3B detects a low peak in the light receiving amount (low peak in transmittance) successively three times. In this way, by the provision of a plurality of grooves 66A (three grooves in this embodiment) as the reference portion 66, the reference portion 66 can be more reliably discriminated from the reaction vessels 56.

Particularly when the three grooves 66A of the reference portion 66 are equally spaced from each other and the distance between adjacent reaction vessels 56 is set to a non-integer multiple of the distance between the three grooves 66A, the light receiving portion 3B can reliably detect the three grooves 66A (reference portion 66) without confusing the grooves with noise components. Specifically, reagent portions 57 are provided in the reaction vessels 56, and the substrate 5 and the cover 6 are generally formed by resin molding. Therefore, the light transmittance may drop not only at the grooves 66A but also at other portions due to the characteristics of the surface of the reagent portions 57, scratches formed on the substrate 5 or the cover 6, and dust or dirt adhering to these parts. However, when the three grooves 66A are equally spaced from each other and the distance between adjacent reaction vessels 56 is a non-integer multiple of the distance between the three grooves 66A as noted above, the three grooves 66A of the reference portion 66 are detected with regularity. Therefore, the grooves can be easily discriminated from noise components which are detected at irregular intervals. As a result, the detection of the reference portion 66 in the microdevice Y is unlikely to be influenced by scratches or dirt.

Similarly to the substrate 5, the cover 6 having the above-described structure may be formed by resin molding using a transparent resin material. The sample introduction port 60, the common flow path 61, the first gas exhaust ports 62, the second gas exhaust port 63, the recesses 64, the cutout 65 and the reference portion 66 can be formed simultaneously at the time of the resin molding.

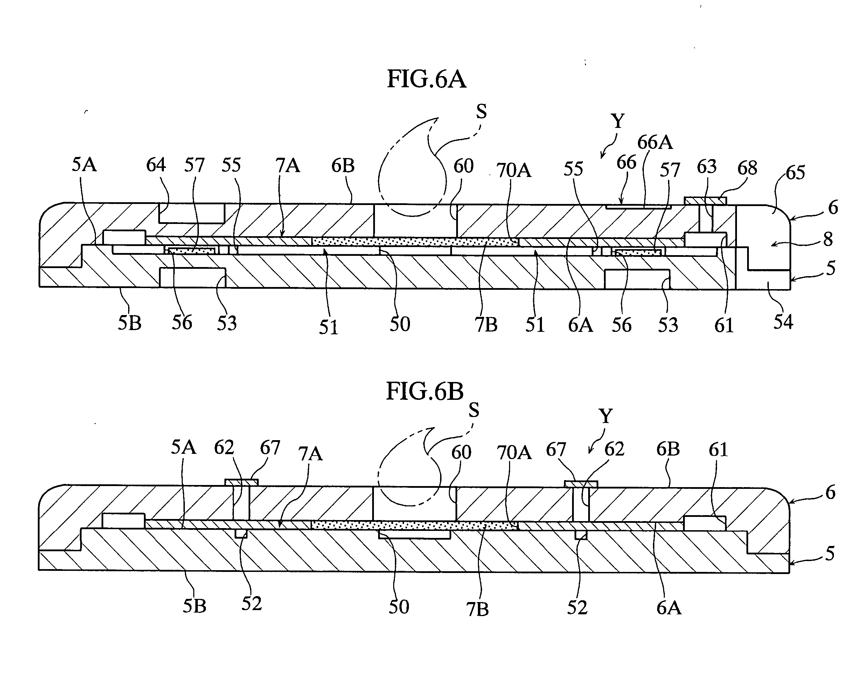

As shown in Figs. 5, 6A and 6B, the adhesive layer 7A serves to bond the cover 6 to the substrate 5. The adhesive layer 7A comprises an adhesive sheet formed with a through-hole 70A at the center portion and interposed between the substrate 5 and the cover 6. The diameter of the through-hole 70A of the adhesive layer 7A is larger than the diameter of the liquid receiving portion 50 of the substrate 5 and that of the sample introduction port 60 of the cover 6. For instance, the adhesive sheet may be formed by forming adhesive layers on opposite surfaces of a base member.

The separation film 7B serves to separate a solid component contained in a sample, such as blood cell components contained in blood. The separation film 7B has a diameter corresponding to the diameter of the through-hole 70A of the adhesive layer 7A and is fitted in the through-hole 70A of the adhesive layer 7A to intervene between the liquid receiving portion 50 of the substrate 5 and the sample introduction port 60 of the cover 6. Forinstance, the separation film 7B may be a porous material. Example of porous material usable as the separation film 7B include paper, foam (expanded member), woven fabric, non-woven fabric, knitted fabric, a membrane filter, a glass filter and gelled material. When the sample is blood and blood cell components contained in blood are to be separated by the separation film 7B, it is preferable to use a separation film 7B whose minimum pore diameter (pore size) is 0.1 to 10 µm.

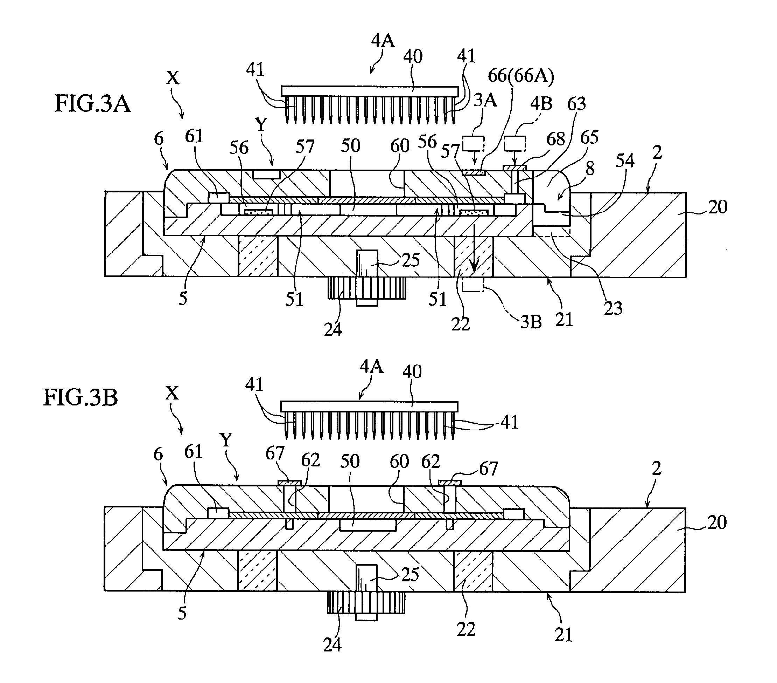

The positioning portion 8 serves as a mark for mounting the microdevice 2 to the mount portion 2 with a predetermined posture, which will be described later. Specifically, by bringing the positioning portion into engagement with a positioning projection 23 (See Figs. 1 and 3) of the mount portion 2, the microdevice Y is mounted to the mount portion 2 with a predetermined posture. As will be understood from the description given above, the positioning portion 8 is made up of the cutout 54 of the substrate 5 and the cutout 65 of the cover 6 and vertically penetrates the periphery of the microdevice Y.

As shown in Figs. 1-3, the housing 1 of the analytical apparatus X retains the microdevice Y on a rotation table 21 of the mount portion 2, which will be described later, and holds the photometry mechanism 3A, 3B and the hole making mechanism 4A, 4B. The housing 1 comprises a base member 11 provided with a rotation drive mechanism 10, and a cover 12 mounted to the base member. The rotation drive mechanism 10 serves to rotate the rotation table 21 of the mount portion 2, which will be described later, and includes a rotation shaft 12 and a gear 13. The rotation shaft 12 is connected to a non-illustrated power source (e.g. a motor) and rotated by the rotation output from the power source. The gear 13 is nonrotatably fixed to the rotation shaft 12 and rotated by rotating the rotation shaft 12.

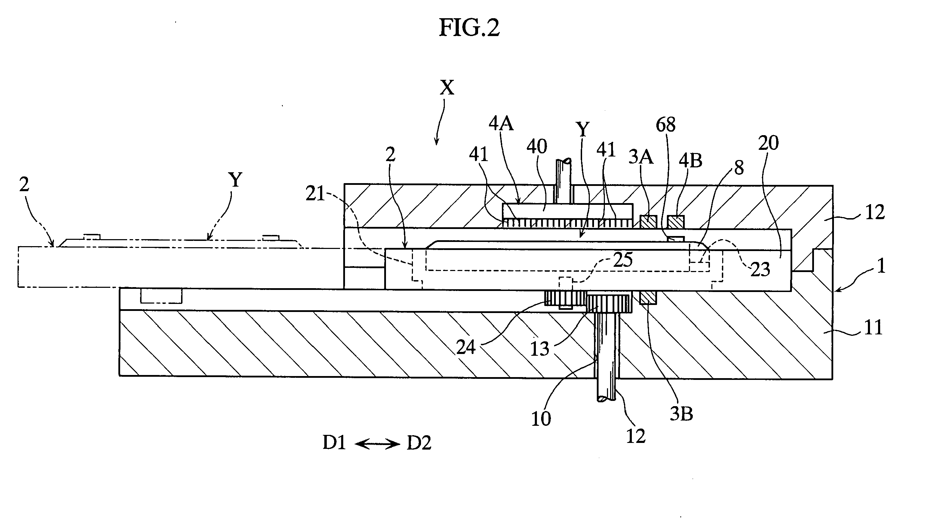

The mount portion 2 serves to hold the microdevice Y and is reciprocally movable relative to the housing 1 in the directions indicated by arrows D1 and D2. The microdevice Y can be mounted on the mount portion 2 when the mount portion is located on the arrow D1 side in the figures (at the position indicated by phantom lines in Fig. 2). The analysis of the sample using the microdevice Y can be performed when the mount portion is located on the arrow D2 side in the figures (at the position indicated by solid lines in Fig. 2).

The mount portion 2 is made up of a holder 20 and the rotation table 21. The holder 20 holds the rotation table 21 rotatably and is reciprocally movable relative to the base member 11 of the housing 1 in the directions indicated by arrows D1 and D2 by a rack and pinion mechanism, for example. The rotation table 21 serves to hold and rotate the microdevice Y. As shown in Fig. 3, the rotation table 21 is provided with a light transmitting region 22, the positioning projection 23 and a gear 24.

The light transmitting region 22 is provided for allowing the light emitted from a light source 3A of the photometry mechanism 3A, 3B and passed through the reaction vessel 56 of the microdevice Y to reach the light receiving portion 3B of the photometry mechanism 3A, 3B. The light transmitting region 22 has an annular shape to correspond to the arrangement of the reaction vessels 56 of the microdevice Y when the microdevice Y is mounted on the rotation table 21. Alternatively, the mount portion 2 may be made entirely transparent so that the light passed through the reaction vessel 56 can reach the light receiving portion 3B of the photometry mechanism 3A, 3B.

The positioning projection 23 engages the positioning portion 8 of the microdevice Y when the microdevice Y is mounted to the mount portion 2 (rotation table 21).

The gear 24 is nonrotatably fixed to the rotation table 21 via a pin 25. Therefore, the gear 24 rotates along with the rotation table 21. When the mount portion 2 is accommodated in the housing 1 as shown in Fig. 2, the gear 24 meshes with the gear 13 of the rotation drive mechanism 10 provided in the housing 1. In this state, by rotating the gear 13 (rotation shaft 12) of the rotation drive mechanism 10, the gear 24 and hence the rotation table 21 rotate.

As shown in Figs. 2 and 3, the photometry mechanism 3A, 3B serves to irradiate the microdevice Y with light and detect the amount of light passed through the microdevice Y. The photometry mechanism is utilized for analyzing the sample in the reaction vessel 56 and detecting the reference portion 66. The photometry mechanism 3A, 3B is made up of the light source 3A and the light receiving portion 3B.

The light source 3A serves to irradiate the microdevice Y with light along the circle on which the reaction vessels 56 are arranged and is fixed to the cover 12 of the housing 1. For instance, the light source 3A includes a plurality of light emitting elements which differ from each other in peak wavelength and which can be driven individually. In this case, the light emitting elements are selectively turned on and off individually depending on the kind of the reagent contained in the reagent portion 57 of each of the reaction vessels 56 (measurement item). The light source 3A may comprise light emitting elements having broad wavelength characteristics such as a white LED or a mercury lamp. In this case, the light source 3A is so designed that the light ray of an intended wavelength is taken out from the light emitted from the light emitting element to irradiate the reaction vessel 56 with the light ray.

The light receiving portion 3B serves to receive the light transmitted through the microdevice Y. For instance, the light receiving portion 3B is fixed to the base member 11 of the housing 1 coaxially with the light source 3A. The amount of light received by the light receiving portion 3B is utilized as the basis for detecting the reference portion 66 of the microdevice Y or analyzing the sample (e.g. computing the concentration). The light receiving portion 3B may comprise a photodiode, for example.

The hole making mechanism 4A, 4B serves to make a hole in the sealing members 67, 68 and includes a first hole making element 4A and a second hole making element 4B.

The first hole making element 4A serves to make holes collectively in a plurality of sealing members 67 and comprises a substrate 40 in the form of a circular plate and a plurality of needles 41 projecting downward from the lower surface of the substrate. The first hole making element 4A is connected to the cover 12 of the housing 1 vertically movably to be reciprocally movable vertically by the operation of a non-illustrated actuator.

As shown in Figs. 2 and 3, the diameter of each of the needles 41 is smaller than that of the first gas discharge ports 62 of the cover 6. The needles 42 are on a common circle to correspond to the arrangement of the first gas discharge ports 62. Therefore, when the first hole making element 4A is moved down with the needles 41 positioned relative to the first gas discharge ports 62 (sealing members 67) of the cover 6, holes are formed collectively with respect to the plurality of sealing members 67. As a result, the first gas discharge ports 62 are opened, and the interior of each of the flow paths 51 communicates with the outside through the branched flow path 52 and the first gas discharge port 62.

The second hole making element 4B serves to make a hole in the sealing member 68 and comprises a semiconductor laser apparatus. The semiconductor laser apparatus 4B is fixed to the housing 1 to be capable of irradiating the sealing member 68 of the microdevice Y with a laser beam. As noted before, the sealing member 68 is made of a material which forms a hole when irradiated with a laser beam. Therefore, a hole is made in the sealing member 68 by positioning the semiconductor laser apparatus 4B relative to the second gas discharge port 63 (sealing member 68) of the cover 6 and irradiating the sealing member 68 with a laser beam by the semiconductor laser apparatus 4B. As a result, the second gas discharge port 63 is opened, and the interior of each of the flow paths 51 communicates with the outside through the common flow path 61 and the second gas discharge port 63.

The method for opening the first and the second gas discharge ports 62 and 63 is not limited to the above-described one. For instance, holes may be made in the sealing members 67 by the irradiation of a laser beam, and a hole may be made in the sealing member 68 by using a needle-like member. Alternatively, the first and the second gas discharge ports 62 and 63 may be opened by melting or deforming the sealing members 67, 68 by applying energy using a light source other than a laser beam apparatus, an ultrasonic generator or a heating element. Alternatively, the first and the second gas discharge ports 62 and 63 may be opened by peeling off the sealing members 67, 68.

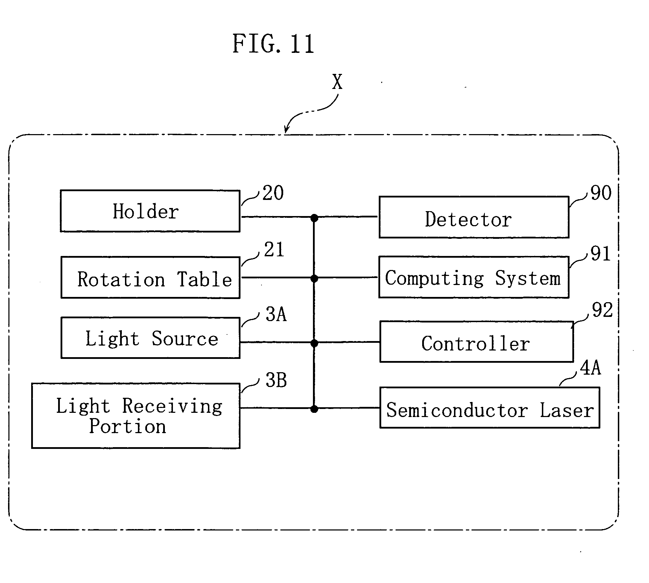

As shown in Fig. 11, in addition to the above-described elements, the analytical apparatus X further includes a detector 90, a computing unit 91 and a controller 92.

The detector 90 detects the reference portion 66 of the microdevice Y based on the result of receiving of light at the light receiving portion 3B when the microdevice Y is irradiated with light from the light source 3Awhile rotating, and determines the position of the sealing members 67, 68 and the reaction vessels 56.

The computing unit 91 performs computation necessary for the analysis of a measurement target component with respect to each of the reaction vessels 56 based on the result of receiving of light at the light receiving portion 3B when the reaction vessel 56 of the microdevice Y is irradiated with light from the light source 3A. Specifically, based on the reference portion 66 detected by the detector 90, the computing unit 91 grasps the amount of light received at the light receiving portion 3B with respect to each of the reaction vessels 56. Further, based on the received amount of light with respect to each reaction vessel 56, the computing unit performs computation necessary for the analysis of the measurement target component in the reaction vessel 56.

The controller 92 controls the operation of each element, and specifically, for example, controls the ON/OFF of the light source 3A and the semiconductor laser apparatus 4B, and the rotation of the rotation table 21 of the mount portion 2.

The sample analysis operation using the microdevice Y and the analytical apparatus X will be described below.

First, to analyze a sample, a microdevice Y to which the sample is supplied is mounted to the mount portion 2 (rotation table 21), and then, the mount portion 2 is moved in the direction indicated by the arrow D2 in Figs. 1 and 2. Specifically, the mounting of the microdevice Y to the mount portion 2 (rotation table 21) is performed while positioning the positioning portion 8 of the microdevice Y relative to the positioning projection 23 of the rotation table 21. The movement of the mount portion 2 is performed by controlling the operation of the holder 20 of the mount portion 2 by the controller 92.

Alternatively, the sample may be supplied to the microdevice Y after the microdevice Y is mounted to the mount portion 2, or the analytical apparatus Y may be so designed as to automatically supply the sample to the microdevice Y. The movement of the mount portion 2 in the direction D2 may be performed manually by the user.

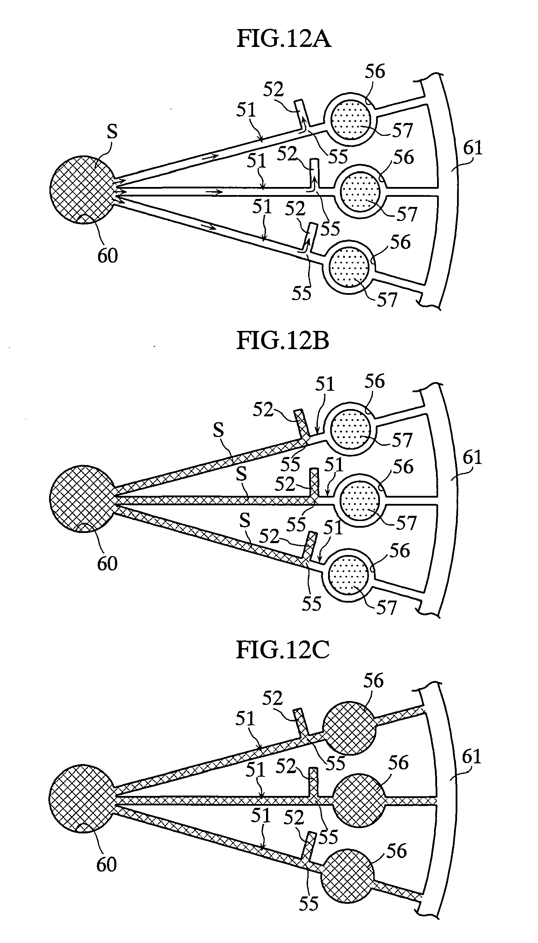

As will be prospected from Figs. 6A and 6B, the sample S supplied to the microdevice Y passes through the separation film 7B in the thickness direction to reach the liquid receiving portion 50, and the solid component contained in the sample is removed. For instance, when blood is used as the sample, blood cell components contained in the blood are removed. When the sample is supplied, the fist and the second gas exhaust ports 62, 63 are closed. Therefore, as indicated by cross-hatching in Fig. 12A, the sample S is mostly retained in the liquid receiving portion 50 and hardly introduced into the flow paths 51.

To introduce the sample S into the flow paths 51, holes are made simultaneously in the plurality of sealing members 67. To make holes, the needles 41 of the first hole making element 4A are positioned relative to the sealing members 67 of the microdevice Y. Specifically, after the reference portion 66 of the microdevice Y is detected by the detector 90, this positioning is performed by rotating the microdevice Y together with the rotation table 21 based on the position of the reference portion 66.

To detect the reference portion 66, light from the light source 3A is directed to the microdevice Y while rotating the microdevice Y. The light having passed through the microdevice Y is received at the light receiving portion 50. As shown in Fig. 10, at the light receiving portion 3B, relatively low points at which the light transmittance (received amount of light) drops are detected repetitively. Of these low points of transmittance, the relatively small drops of transmittance are caused due to the existence of stepped portions between a reaction vessel 56 and the upper surface 5A of the substrate 5, for example. The relatively large drops of transmittance are caused by the grooves 66A of the reference portion 66. This shows that when the region around the reference portion 66 of the microdevice Y is irradiated with light, three successive local minimums at which the transmittance drops considerably are detected. Thus, with the detector 90 monitoring the amount of light (transmittance) received at the light receiving portion 3B, it is possible to recognize the reference portion 66 upon detection of the sharp, consecutive drops.

Alternatively, the apparatus may be so designed that the sealing members 67 are positioned relative to the needles 41 of the first hole making element 40 just by mounting the microdevice Y on the rotation table 21. In such a case, the detection of the reference portion 66 is eliminated.

As will be prospected from Fig. 3B, the formation of holes in the sealing members 67 is performed by moving down the first hole making element 4A to pierce the sealing members 67 with the needles 41 and then lifting the first hole making element 4A to pull the needles 41 out of the sealing members 41. By this operation, holes are formed simultaneously in a plurality of sealing members 67. The up and down movement of the first hole making element 4A is performed by controlling the first hole making element 4A by the controller 92 in accordance with the operation of an operation switch by the user, for example.

When holes are formed in the sealingmembers 67, the interior of the flow paths 51 communicates through the first gas discharge ports 62 and the branched flow paths 52. Therefore, the sample retained in the liquid receiving portion 50 moves through the flow paths 51 by capillary action. As indicated by cross hatching in Fig. 12B, the sample S moving through the flow path 51 reaches the branched portion 55 and then flows into the branched flow path 52. As a result, the sample S is retained very close to the reaction vessel 56, whereby the preparation for the reaction of the sample S with the reagent in the reaction vessel 56 is completed.

To supply the sample S into the reaction vessel 56, a hole is formed in the sealing member 68. The formation of a hole in the sealing member 68 is performed by positioning the sealing member 68 relative to the semiconductor laser apparatus 4B as shown in Figs. 2 and 3A and then irradiating the sealing member 68 with a laser beam emitted from the semiconductor laser apparatus 4B.

Similarly to the positioning of the microdevice Y relative to the first hole making element 40, the positioning of the sealing member 68 relative to the semiconductor laser apparatus 4B is performed by detecting the reference portion 66 by the detector 90 and then rotating the microdevice Y together with the rotation table 21 in accordance with the detection result. Alternatively, the positioning the sealing member 68 relative to the semiconductor laser apparatus 4B may be performed without detecting the reference portion 66. In such a case, the result of detection of the reference portion performed in forming holes in the sealing members 67 may be utilized for positioning the sealing member 68 relative to the semiconductor laser apparatus 4B.

When a hole is formed in the sealing member 68, the interior of the flow paths 51 communicates through the second gas discharge port 63 and the common flow path 61. Therefore, the sample S having been stopped before the reaction vessels 56 starts to move again through the flow paths 51 by capillary action. As indicated by cross hatching in Fig. 12C, in the flow paths 51, the sample S moves beyond the branched portion 55 and is collectively supplied to the plurality of reaction vessels 56.

In each of the reaction vessels 56, the reagent portion 57 is dissolved by the sample S, whereby a liquid phase reaction system is established. Thus, the sample S reacts with the reagent, so that the liquid phase reaction system develops a color related with the amount of the measurement target component contained in the sample S or a reaction product is formed correspondingly to the amount of the measurement target component. As a result, the liquid phase reaction system in the reaction vessel 56 shows the light transmittance (light absorbance) corresponding to the amount of the measurement target component.

When a predetermined period has elapsed after the supply of the sample to each of the reaction vessels 56, photometry with respect to the liquid phase reaction system in the reaction vessel 56 is performed by the photometry mechanism 3A, 3B. Specifically, the controller 92 recognizes the position of the reference portion 66 detected by the detector 90, and based on the position of the reference portion 66, the controller controls the rotation shaft 12 so that a target reaction vessel 56 comes to the position of the photometry mechanism 3A, 3B. The recognition of the position of the reference portion 66 may be performed immediately before the determination of the reaction vessel 56, or it may be performed based on the detection result obtained in forming holes in the sealing members 67, 68.

In the photometry mechanism 3A, 3B, the light source 3A emits light to irradiate the reaction vessel 56, and the light receiving portion 3B receives the light passed through the reaction vessel 56. Based on the received amount of light, the computing unit 91 grasps the degree of color development of the liquid phase reaction system and hence analyzes the measurement target component contained in the sample S. The photometry and analysis are repetitively performed while controlling the rotation of the rotation table 21 so that each of the target reaction vessels 56 is successively transferred to the position of the photometry mechanism 3A, 3B in a predetermined order.

In the present invention, as the mark to be utilized for determining the position of the reaction vessels 56 of the microdevice Y, the reference portion 66 including three grooves 66A is provided in the microdevice Y. In the analytical apparatus X, the position of the reaction vessels 56 of the microdevice Y is determined by detecting the position of the reference portion 66 of the microdevice Y by the detector 90 based on the result of the light receiving at the light receiving portion 3B. Therefore, as compared with the conventional method in which the position of the reaction vessels of the microdevice Y is determined by utilizing a mark provided at a rotation table or a rotation shaft of the analytical apparatus, the influence by the dimensional tolerance of the microdevice Y or error in positioning the microdevice Y at the mount portion 2 is small.

The reference portion 66 (three grooves 66A) can be formed integrally on the cover 6 in resin molding the cover. Further, since the reference portion 66 (three grooves 66A) is provided on the same circle as the reaction vessels 56, the reference portion 66 (three grooves 66A) can be detected by utilizing the photometry mechanism 3A, 3B which is necessary for the sample analysis in the analytical apparatus X, and it is unnecessary to provide another photometry mechanism for detecting the reference portion 66 (three grooves 66A). As noted before, the reference portion 66 of the microdevice Y is so designed as to be properly detected without being confused with scratches or dirt. Therefore, even when high position detecting accuracy is demanded in the sample analysis using the small analytical instrument such as the microdevice Y, the present invention can satisfy such a demand with a simple and inexpensive structure, and an increase in size of the analytical apparatus X can be avoided.

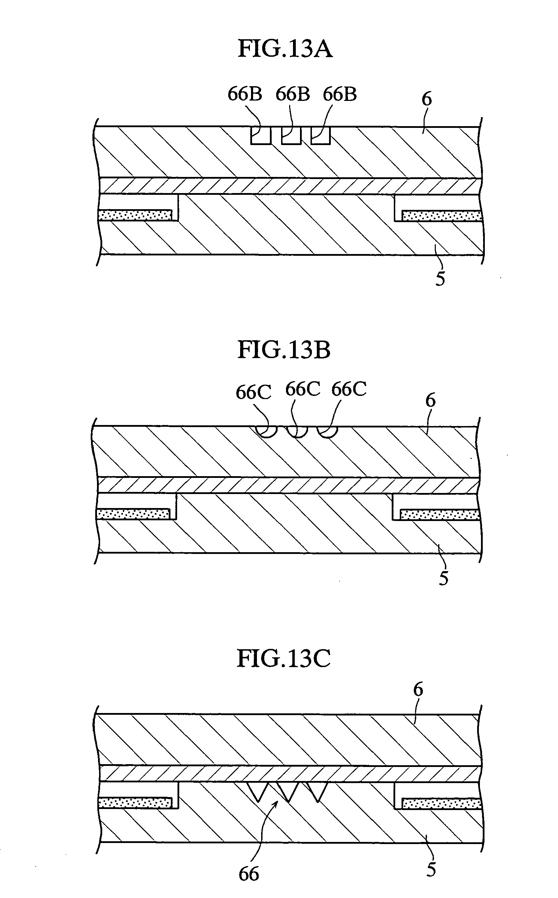

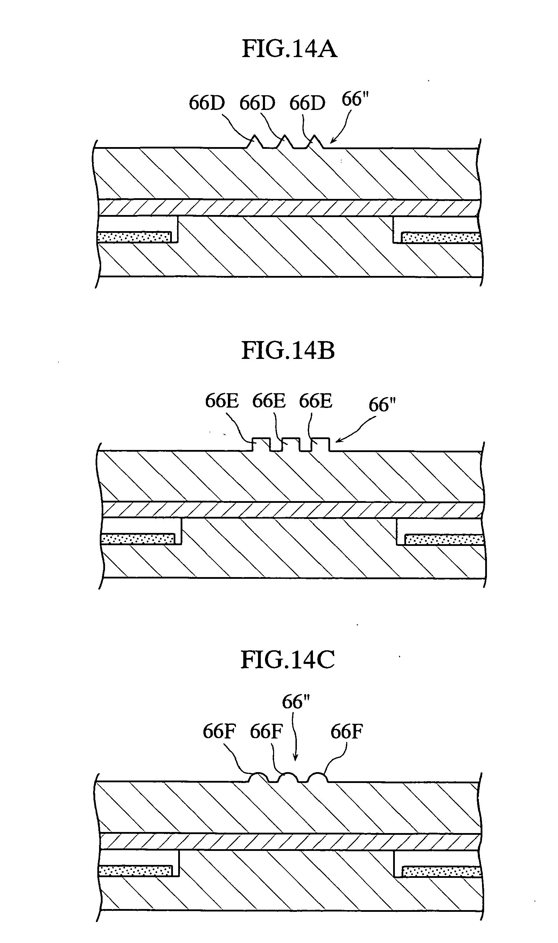

The present invention is not limited to the example described in the first embodiment and may be varied in design in various ways. For example, the structure of the reference portion 66 is not limited to that including three grooves 66A having a V-shaped cross section as shown in Fig. 9. For instance, the reference portion may include three grooves 66B having a rectangular cross section as shown in Figs. 13A or three grooves 66C having a semicircular cross section as shown in Figs. 13B. Alternatively, the reference portion may include three grooves having a cross section other than the illustrated ones. As shown in Fig. 13C, the reference portion 66 may be formed at the substrate 5. As shown in Figs. 14A-14C, the reference portion 66" may include three projections 66D, 66E and 66F. Although Figs. 14A-14C show three projections 66D, 66E and 66F having triangular, rectangular and semicircular cross sections, respectively, the cross sectional configuration of the projections is not limited to these. Further, the number of grooves or projections of the reference portion is not limited to three.

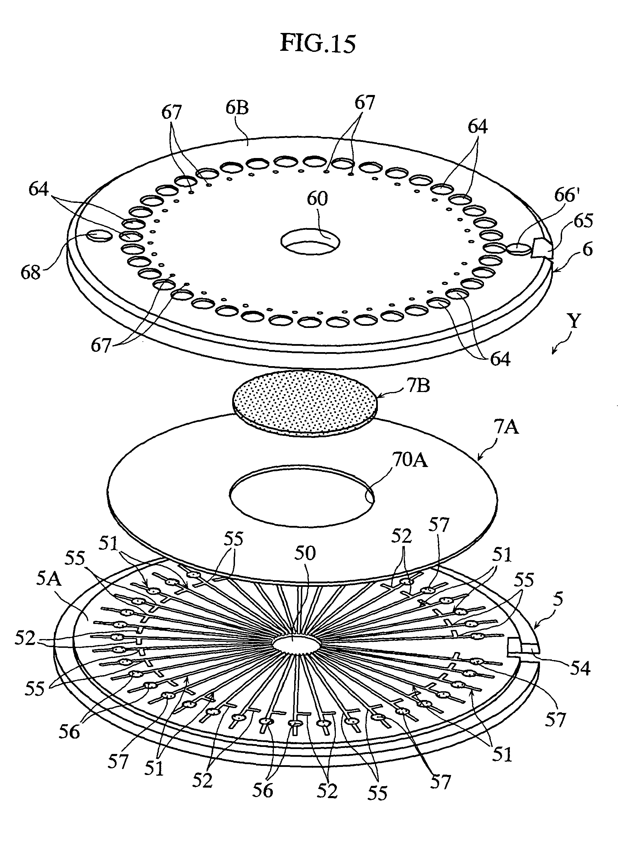

A second embodiment of the present invention will be described With reference to Figs. 15-17. In these figures, the elements which are identical or similar to those of the first embodiment are designated by the same reference signs as those used for the first embodiment, and the description thereof is omitted.

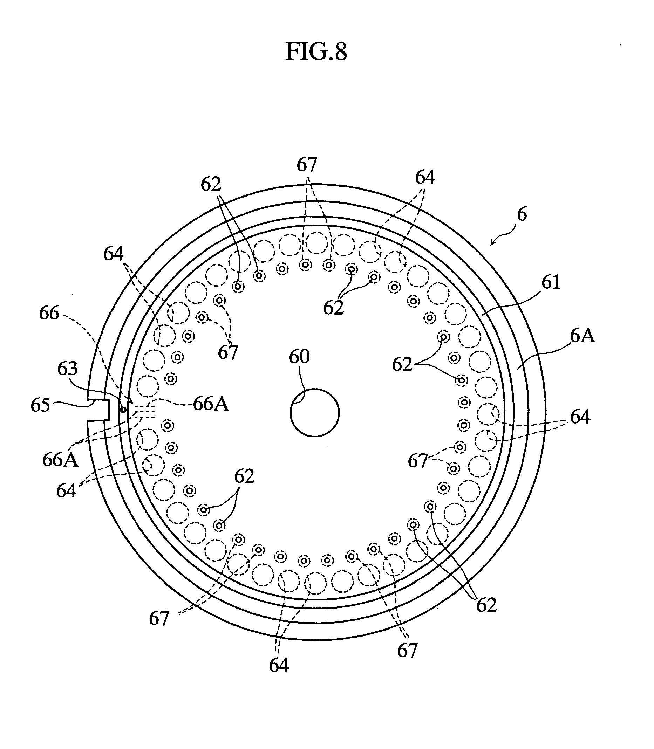

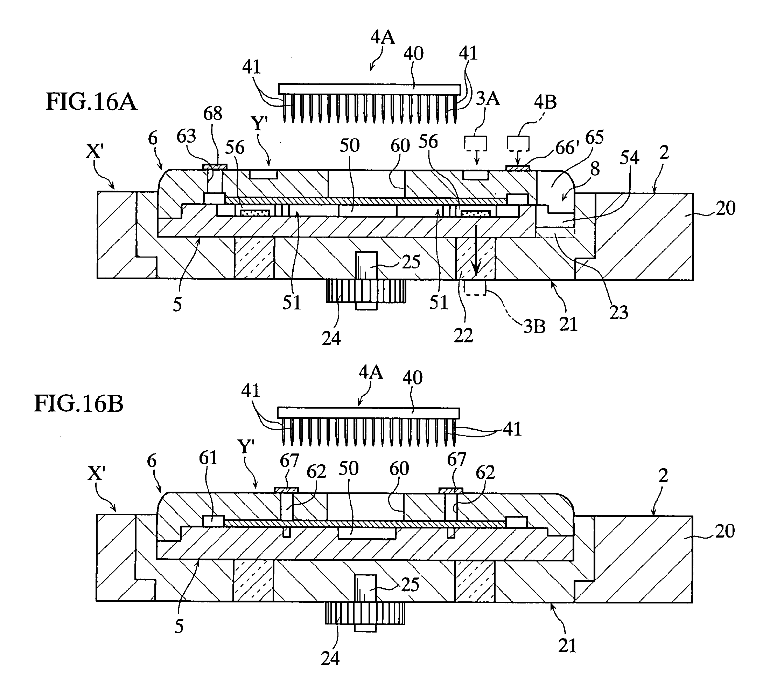

The microdevice Y' shown in Figs. 15, 16A and 16B is basically similar in structure to the microdevice Y (See Figs. 4 and 8) of the first embodiment but differs from the microdevice Y in structure of the reference portion 66'.

Specifically, the reference portion 66' of the microdevice Y' has a reflectivity which is different from the reflectivity of the upper surface of the cover 6 and the sealing member 68 and is provided at the same distance from the center of the cover 6 as the sealing member 68. For instance, such a reference portion 66' is made of a metal such as aluminum whose reflectivity is higher than those of the cover 6 and the sealing member 68.

Since it is only necessary that the reference portion 66' is optically distinguishable from the cover 6 and the sealing member 68, the reflectivity of the reference portion may be lower than those of the cover 6 and the sealing member 68. Therefore, the reference portion may be a black mark. The reference portion 66' may be so structured as to scatter the received light. The reference portion 66' may be provided by partially roughening the surface of the cover 6 or forming at least one recess or projection at the cover 6. Alternatively, the positioning portion 8 maybe utilized as the reference portion 66' .

The analytical apparatus X' shown in Figs. 16A and 16B is basically similar to the analytical apparatus X (See Figs. 1-3) of the first embodiment but differs from the analytical apparatus X in structure for detecting the reference portion 66'.

Specifically, in this embodiment, the reference portion 66' is detected not by utilizing the photometry mechanism 3A, 3B but utilizing the second hole making element (semiconductor laser apparatus 4B) for forming an opening in the sealing member 68.

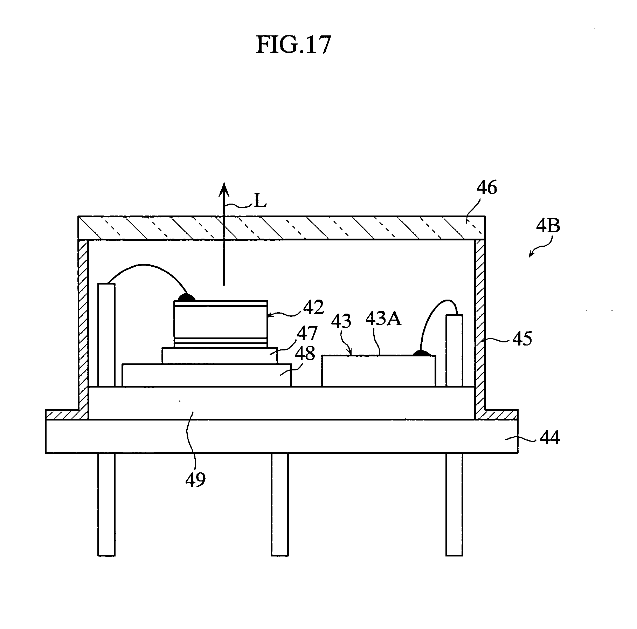

The semiconductor laser apparatus 4B is fixed to the cover 12 of the housing 1 to be capable of directing a laser beam to the circle on which the sealing member 68 and the reference portion 66' are provided (See Fig. 2). For instance, as the semiconductor laser apparatus 4B, usemaybemade of one including a laser diode chip 42 and a photodiode chip 43, as shown in Fig. 17. The laser diode chip 42 and the photodiode chip 43 are accommodated in a space defined by a stem 44, a cap 45 and a transparent plate 46. The laser diode chip 42 is mounted to a sub-mount 47 via a sub-base 49 provided with an electrode 48. The photodiode chip 43 is mounted to the sub-mount 47 so that the light receiving surface 43A spreads in a direction crossing an optical axis L of a laser beam emitted from the semiconductor laser apparatus 4B and that the photodiode chip is spaced from the laser diode chip 42 in a direction perpendicular to the optical axis L.

The operation of sample analysis to be performed using the microdevice Y' and the analytical apparatus X' is basically similar to that according to the first embodiment of the present invention, but the operation to detect the reference portion 66' (to determine the position of reaction vessel 56) is different, as described below.

Specifically, the detection of the reference portion 66' in the analytical apparatus X' is performed by lighting the laser diode chip 42 of the semiconductor laser apparatus 4B while rotating the microdevice Y' by the rotation table 21.

The lighting of the laser diode chip 42 is performed under the control of the controller 92 (See Fig. 11). The laser beam emitted from the laser diode chip 42 is received by the photodiode chip 43 after the reflection at the microdevice Y' or directly. The light emitted from the laser diode chip 42 impinges on the circle at which the sealing member 68 and the reference portion 66' of the microdevice Y' are provided. For instance, the reference portion 66' has a higher reflectivity to be optically distinguishable from the cover 6 and the sealing member 68 of the microdevice Y'. Therefore, the amount of light received by the photodiode chip 43 increases when the laser beam impinges on the reference portion 66' of the microdevice Y'. Therefore, by monitoring the amount of light received at the photodiode chip 43, the detector 90 of the analytical apparatus X' can detect the reference portion 66' of the microdevice Y'. Particularly, in the semiconductor laser apparatus 4B shown in Fig. 17, the light receiving surface 43A of the photodiode chip 43 spreads in a direction perpendicular to the optical axis L of the laser diode chip 42 at a position deviated from the optical axis L. Therefore, the photodiode chip 43 can efficiently receive the light reflected at the microdevice Y'. Further, with the use of a laser beam, the reference portion 66' can be accurately detected even when the reference portion 66' is small, because the spot diameter of the laser beam is small. Therefore, with the use of a laser beam, the size of the reference portion 66' can be reduced to satisfy the demand for the size reduction of the microdevice Y', and further, the demand for high position detecting accuracy can be satisfied.

It is to be noted that the output of the laser beam to detect the reference portion 66' is made smaller than that for forming a hole in the sealing member 68. By doing so, while efficiently forming a hole in the sealing member 68, the power consumption for detecting the reference portion 66' can be made small.

In the present invention, as the mark to be utilized for determining the position of the reaction vessels 56 of the microdevice Y', the reference portion 66' is provided in the microdevice Y'. Therefore, as compared with the conventional method in which the position of the reaction vessels of the microdevice is determined by utilizing a mark provided at a rotation table or a rotation shaft of the analytical apparatus, the influence by the dimensional tolerance of the microdevice Y' or error in positioning the microdevice Y' at the mount portion 2 is small.

In the analytical apparatus X', the detection of the reference portion 66' of the microdevice Y' is performed by utilizing the semiconductor laser apparatus 4B which is the light source for forming a hole in the sealingmember 68. Further, the semiconductor laser apparatus 4B generally incorporates the photodiode (chip) 43 to monitor the output of the laser diode chip 42 also incorporated therein. Therefore, in the analytical apparatus X' designed to form a hole in the microdevice Y' by laser beam irradiation to provide communication between the inside and outside of the flow paths 51, the parts necessary for the sample analysis can be utilized also for the detection of the reference portion 66' , and additional parts for detecting the reference portion do not need to be provided. Therefore, even when high position detecting accuracy is demanded for the sample analysis using a small analytical instrument such as the microdevice Y', the present invention can satisfy such a demand with a simple and inexpensive structure, and an increase in size of the analytical apparatus X' can be avoided.

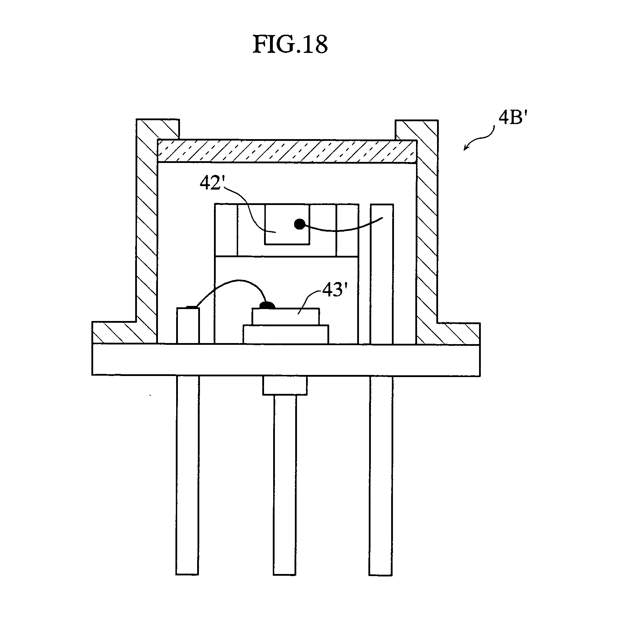

The present invention is not limited to the example described in the second embodiment and may be varied in design in various ways. For instance, the semiconductor laser apparatus 4B usable in the present invention is not limited to the example shown in Fig. 17. For instance, use may be made of a semiconductor laser apparatus 4B' as shown in Fig. 18, in which the photodiode chip 43' is arranged on the optical axis L of a laser beam emitted from the laser diode chip 42. Further, a semiconductor laser apparatus in which a photodiode is integrally formed on a sub-mount may be used.

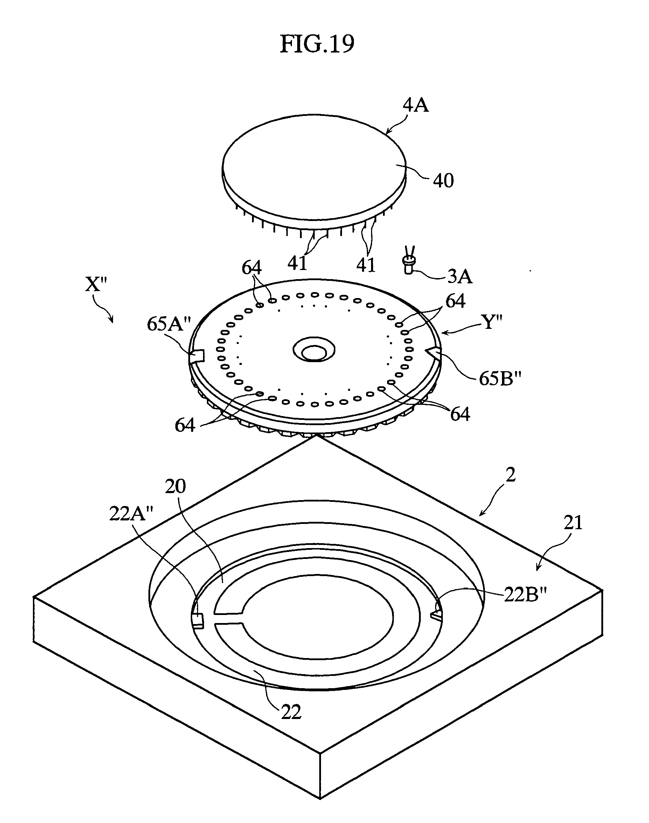

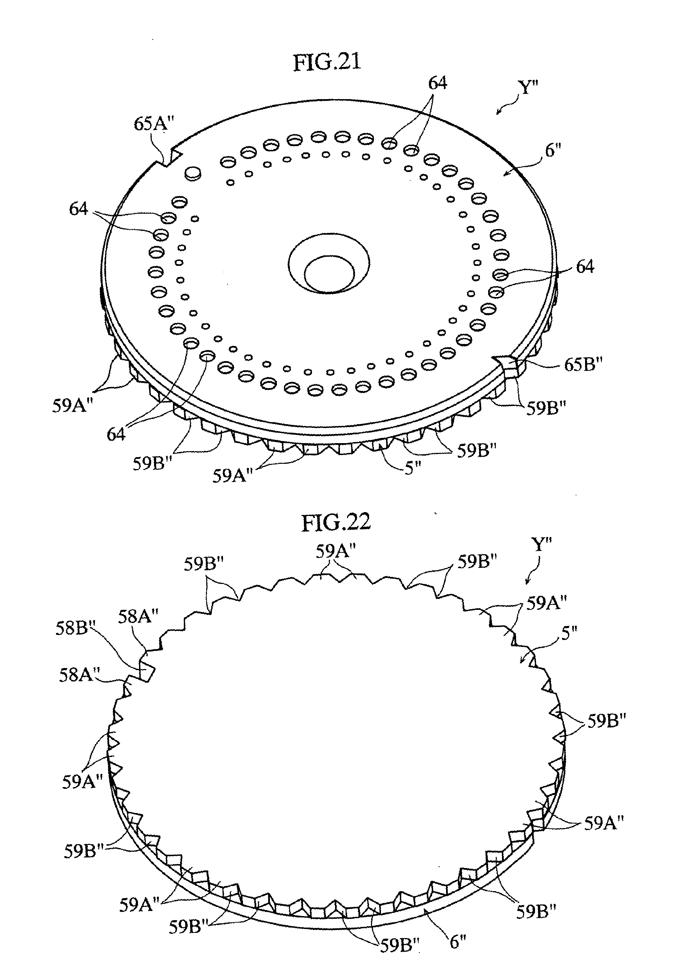

A third embodiment of the present invention will be described With reference to Figs. 19-25. In these figures, the elements which are identical or similar to those of the first embodiment are designated by the same reference signs as those used for the first embodiment, and the description thereof is omitted.

The microdevice Y" shown in Figs. 19-23 is basically similar in structure to the microdevices Y and Y' (See Figs. 5 and 15) of the first and the second embodiments but differs from the microdevices Y and Y' in structure of the reference portions 58A" , 58B" and in the point that recognizing portions 59A" , 59B" utilized for determining the position of reaction vessels 56 are provided.

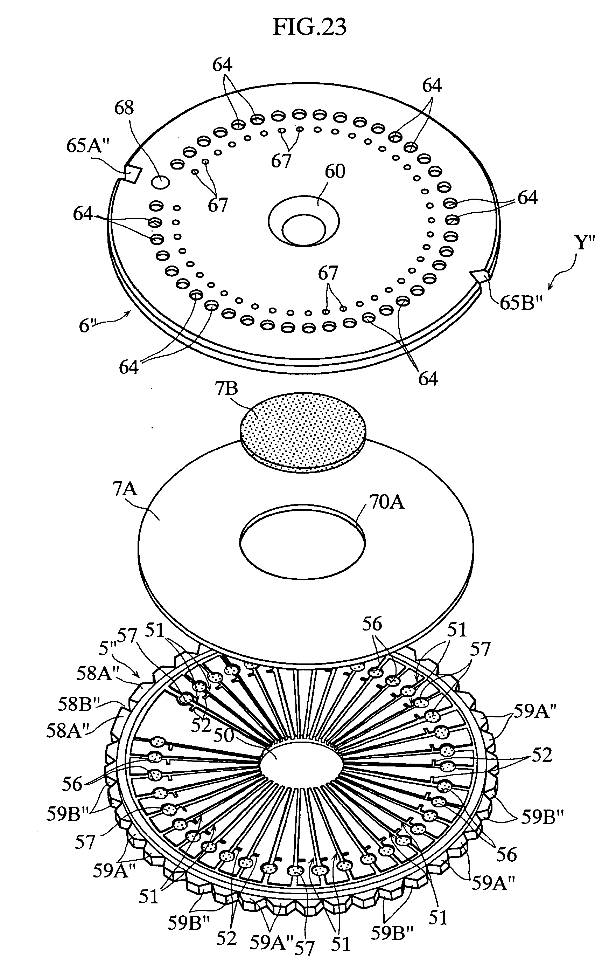

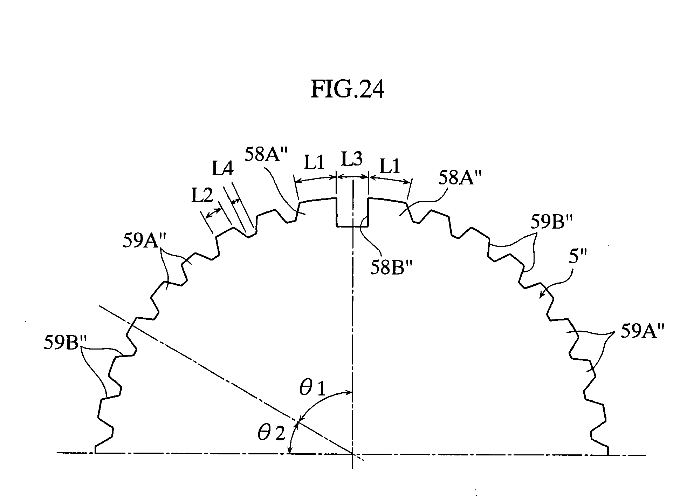

Specifically, in the microdevice Y", the periphery of the substrate 5" is formed with projections 58A", 59A" and recesses 58B" , 59B" which are alternately arranged. Of the plurality of projections 58A", 59A" and recesses 58B'', 59B'', a pair of reference projections 58A" and a reference recess 58B" positioned between the reference projections 58A" constitute the reference portion. As better shown in Fig. 24, the dimension L1 of each of the reference projections 58A" along the circle of the substrate 5" is larger than the corresponding dimension L2 of other projections 59A". The dimension L3 of the bottom of the reference recess 58B" in the circumferential direction of the substrate 5" is larger than the corresponding dimension L4 of other recesses 59B". As better shown in Fig. 23, each of the recesses 59B" is provided on an extension of a respective flow path 51 and constitutes the recognizing portion.

When the substrate 5" is to be formed by resin molding, the projections 58A' ' , 59A' ' and the recesses 58B' ' , 59B' ' can be formed in the resin molding process at the same time as the liquid receiving portion 50, the flow paths 51, the branched flow path 52 and so on by appropriately designing the shape of the die.

In the substrate 5", a flow path 51 is not provided on a line connecting the reference recess 58B'' and the center of the substrate 5''. Therefore, the position of each of the flow paths 51 can be determined by detecting the phase difference θ1 between the recess 59" corresponding to the flow path 51 and the reference recess 58B" (or the reference projection 58A").

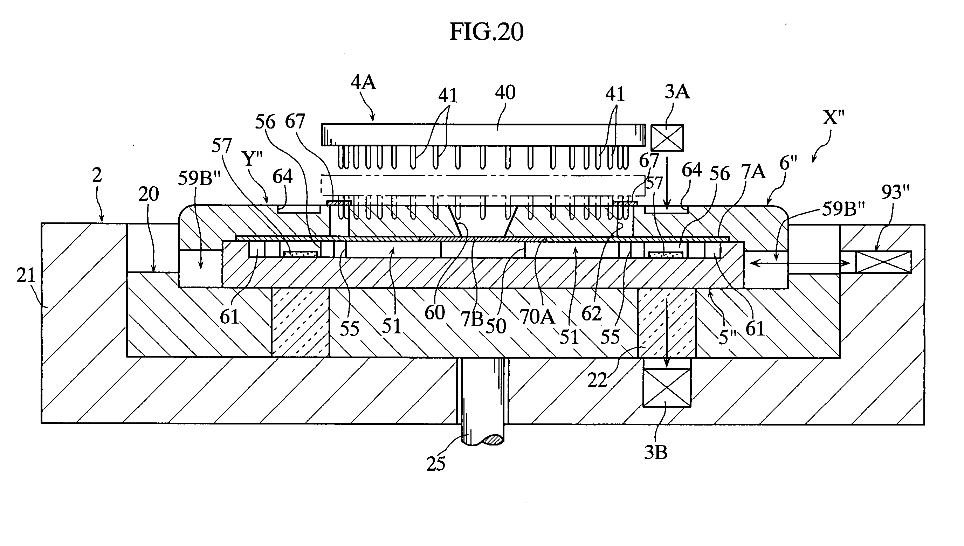

The periphery of the cover 6" of the microdevice Y" is provided with a first and a second cutouts 65A" and 65B". As will be understood from Fig. 20, the first and the second cutouts 65A" and 65B" serve as a mark for positioning the microdevice Y" relative to the analytical apparatus X". The first cutout 65A" is formed at a location corresponding to the reference recess 58B" of the substrate 5" and has a shape corresponding to the reference recess 58B" . The second cutout 65B" is formed at a location corresponding to the reference recess 59B" of the substrate 5" which is positioned on the opposite side of the reference recess 58B' ' across the center of the substrate 5" and has a shape corresponding to the reference recess 59B". Therefore, the microdevice Y" is perforated in the thickness direction at locations corresponding to the first and the second cutouts 65A" and 65B" of the cover 6".

When the substrate 6'' is to be formed by resin molding, the first and the second cutouts 65A" and 65B" can be formed in the resin molding process at the same time as the sample introduction port 60, the first and the second gas exhaust ports 62, 63 and so on by appropriately designing the shape of the die.

The analytical apparatus X" shown in Figs. 19 and 20 is basically similar to the analytical apparatus X, X' (See Figs. 1-3 or 16) of the first and the second embodiments but differs from the analytical apparatus X, X' in structure for detecting the reference portions 58A" , 58B" .

Specifically, the analytical apparatus X" includes a rotation table 21 formed with a first and a second positioning projections 22A" and 22B'' and further includes a position detecting mechanism 93''.

The first and the second positioning projections 22A" and 22B" are utilized for retaining the microdevice Y" at an appropriate position of the rotation table 21. The first positioning projection 22A" is positioned relative to the reference recess 58B" of the substrate 5" of the microdevice Y" and has a shape corresponding to the reference recess 58B". The second positioning projection 22B" is positioned relative to the particular recess 59B" (recess positioned on the opposite side of the reference recess 58B" across the center of the substrate 5") of the substrate 5" of the microdevice Y" and has a shape corresponding to the reference recess 59B".

The position detecting mechanism 93" serves to determine the position of a target reaction vessel 56 (See Fig. 23) of a plurality of reaction vessels 56 of the microdevice Y" . The position detecting mechanism 93" emits light to the periphery of the microdevice Y" and receives the reflected light, and includes a reflective photosensor, for example. For example, the position detecting mechanism 93" is so arranged that the amount of light reflection becomes maximum at the projections 58A" and 59A" of the substrate 5" of the microdevice Y.

The operation of sample analysis to be performed using the microdevice Y" and the analytical apparatus X" is basically similar to that according to the first embodiment of the present invention, but the operation to determine the position of the reaction vessel 56 is different, as described below.

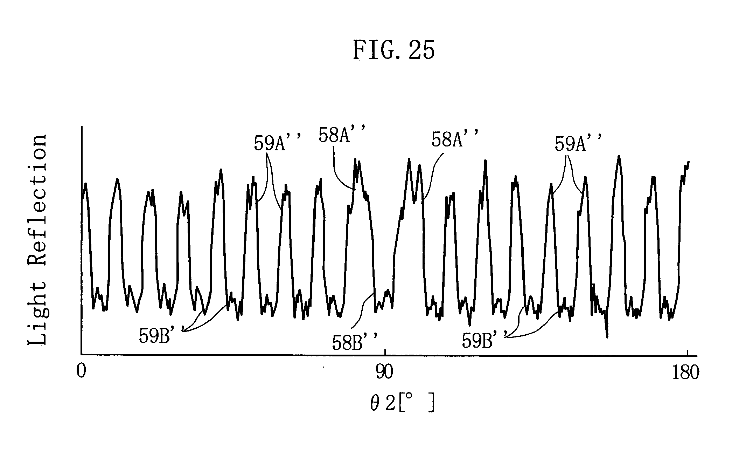

In the microdevice Y", light may be directed to the periphery of the substrate 5' ' from the side with the microdevice Y" rotating. In this instance, the state of reflective light can be different between the projections 58A" , 59A" and the recesses 58B" , 59B", or between the reference projections 58A" and other projections 59A" , or between the reference recess 58B" and other recesses 59B". Specifically, the position detecting mechanism 93" (e.g.reflective photosensor) may be arranged so that the amount of light reflection is maximum at the projections 58A" and 59A". In this case, as shown in Fig. 25, firstly, the light reflected by the periphery of the substrate 5" is smaller at the recesses 58B", 59B" than at the projections 58A' ' , 59A' ' . Secondly, the half width of a high peak of the light amount is smaller at other projections 59A" than the reference projection 58A" . Thirdly, the half width of a low peak of the light amount is smaller at other recesses 59B'' than at the reference recess 58B". In this case, the reference recess 58B" can be detected by detecting the low peak where the half width of the high peak increases or a portion where the half width of the low peak increases.

In the position detecting mechanism 93", light is directed to the periphery of the microdevice Y" while rotating the microdevice Y" by utilizing the rotation table 21, and the reflected light is received to monitor the amount of reflected light. By this operation, as described with reference to Fig. 25, the reference recess 58B" of the substrate 5" can be detected. Based on the position of the reference recess 58B'', the position of other recesses 59B'', and hence the position of a target reaction vessel 56 of the microdevice Y" can be determined. Therefore, by rotating the rotation shaft 12 based on the control variable corresponding to the phase difference θ1 between a target recess 59B" (reaction vessel 56) and the reference recess 58B" , the target reaction vessel 56 can be positioned between the light source 3A and the light receiving portion 3B of the photometry mechanism 3A, 3B.

In the present invention, as the mark to be utilized for determining the position of the reaction vessels 56 of the microdevice Y", projections 58A", 59A" and recesses 58B", 59B" are provided in the microdevice Y". In the analytical apparatus X", the position of the reaction vessels 56 of the microdevice Y" is determined by detecting the position of the projections 58A", 59A" and recesses 58B'', 59B" of the microdevice Y" by the position detecting portion 93". Therefore, as compared with the conventional method in which the position of the reaction vessels of the microdevice Y is determined by utilizing a mark provided at a rotation table or a rotation shaft of the analytical apparatus, the influence by the dimensional tolerance of the microdevice Y" or error in positioning the microdevice Y" at the reaction table 21 is small. Therefore, even when high position detecting accuracy is demanded in the sample analysis using a small analytical instrument such as the microdevice Y", the present invention can satisfy such a demand with a simple and inexpensive structure. Further, by employing the simple structure, size reduction of the analytical apparatus X" is realized.

The present invention is not limited to the examples of the first through the third embodiments and may be varied in design in various ways. For example, in the foregoing embodiments, the analysis is performed based on the light transmitted when the reaction vessel 56 are irradiated with light. However, the present invention is also applicable to the sample analysis performed based on the light reflected at the reaction vessel. Further, the present invention is not limited to the analysis using a microdevice as an analytical instrument but is applicable to the sample analysis using other analytical instruments.

## Claims

1. An analytical instrument comprising a plurality of reaction vessels for retaining reaction liquid of a sample and a reagent;
the analytical instrument also comprising a reference portion for enabling recognition of a particular portion of the analytical instrument.

2. The analytical instrument according to claim 1, wherein the reaction vessels are arranged on a common circle.

3. The analytical instrument according to claim 2, wherein the reference portion is arranged on the common circle for the reaction vessels.

4. The analytical instrument according to claim 3, wherein the reference portion is formed between adjacent ones of the reaction vessels on the circle and includes a plurality of linear portions spaced from each other in a circumferential direction.

5. The analytical instrument according to claim 4, wherein the linear portions are equally or generally equally spaced from each other.

6. The analytical instrument according to claim 5, wherein distance between the reaction vessels is a non-integer multiple of a distance between the linear portions.

7. The analytical instrument according to claim 4, wherein each of the linear portions is a groove.

8. The analytical instrument according to claim 7, wherein each of the linear portions has a V-shaped cross section.

9. The analytical instrument according to claim 1, wherein the reference portion has reflectivity which is different from reflectivity of other portions.

10. The analytical instrument according to claim 9, wherein the reference portion is made of material whose reflectivity is higher than reflectivity of other portions.

11. The analytical instrument according to claim 1, wherein the reference portion includes at least a projection or a recess.

12. The analytical instrument according to claim 11, wherein the analytical instrument is held, in use, on a rotation table of an analytical apparatus; and
wherein the reference portion is utilized for positioning the analytical instrument relative to the rotation table.

13. The analytical instrument according to claim 11, further comprising a recognizing portion utilized for recognition of a target reaction vessel and provided correspondingly to the reaction vessel.

14. The analytical instrument according to claim 13, wherein the recognizing portion includes a projection or a recess having a different shape from the reference portion.

15. A reaction vessel position determining method for an analytical instrument for determining position of each of a plurality of reaction vessels provided in the analytical instrument for retaining reaction liquid of a sample and a reagent, the method comprising:
providing the analytical instrument with a reference portion for enabling determination of position of a particular portion of the analytical instrument; and determining the position of each of the reaction vessels by detecting the reference portion.

16. The reaction vessel position determining method for an analytical instrument according to claim 15, wherein, in an analytical instrument in which the reaction vessels are arranged on a common circle and designed to be suitable for analysis of the sample by an optical method,
the reference portion is provided on the common circle with the reaction vessels; and
the reference portion is detected by photometry means used for the analysis of the sample by utilizing the analytical instrument.

17. The reaction vessel position determining method for an analytical instrument according to claim 16, wherein the detection of the reference portion is performed by irradiating the analytical instrument with light while moving the photometry means relative to the analytical instrument along the circle on which the reaction vessels are arranged, and receiving light traveling from the analytical instrument at the photometry means.

18. The reaction vessel position determining method for an analytical instrument according to claim 17, wherein at least one recess or projection is provided as the reference portion; and
wherein the detection of the reference portion is performed by receiving, at the photometry means, the light transmitted through the analytical instrument when the analytical instrument is irradiated with light.

19. The reaction vessel position determining method for an analytical instrument according to claim 18, wherein a plurality of linear grooves are provided as the reference portion.

20. The reaction vessel position determining method for an analytical instrument according to claim 15, wherein laser beam is used as the light to irradiate the analytical instrument.

21. The reaction vessel position determining method for an analytical instrument according to claim 20, wherein position of a target reaction vessel is determined based on change of amount of light reflection obtained by irradiating the analytical instrument with light while rotating the analytical instrument and receiving the reflected light.

22. The reaction vessel position determining method for an analytical instrument according to claim 21, wherein the reference portion is made to have reflectivity which is different from reflectivity of other portions.

23. The reaction vessel position determining method for an analytical instrument according to claim 20, wherein, in addition to the reaction vessels, the analytical instrument further includes a flow path for moving a sample by causing capillary force to act on the sample, an exhaust port for exhausting gas from the flow path, and a sealing member closing the exhaust port and capable of being perforated by irradiation of laser beam; and
wherein, as a light source for irradiating the reference portion with laser beam, a light source for perforating the sealing member is used.

24. The reaction vessel position determining method for an analytical instrument according to claim 23, wherein, the light source is so controlled that output of laser beam emitted from the light source be larger in perforating the sealing member than in detecting the reference portion.

25. The reaction vessel position determining method for an analytical instrument according to claim 15, wherein position of a target reaction vessel is determined based on change of amount of light reflection obtained by irradiating the analytical instrument with light while rotating the analytical instrument and receiving the reflected light.

26. The reaction vessel position determining method for an analytical instrument according to claim 25, wherein, the analytical instrument to be used is in a form of a circular plate as a whole and includes a periphery provided with the reference portion and a recognizing portion utilized for determining position of a target reaction vessel and provided correspondingly to the reaction vessel, and wherein the position of each of the reaction vessels is determined based on light reflection from the analytical instrument when the analytical instrument is irradiated with light traveling from side.

27. The reaction vessel position determining method for an analytical instrument according to claim 26, wherein, the irradiation of the analytical instrument with light and receiving of light from the analytical instrument are performed by using a reflective photosensor.

28. The reaction vessel position determining method for an analytical instrument according to claim 27, wherein, the reflective photosensor includes a light emitting portion and a light receiving portion; and
wherein the light emitting portion and the light receiving portion are so arranged that the amount of light reflection becomes maximum when light is reflected at a projection of the analytical instrument.

29. An analytical apparatus for analyzing a sample using an analytical instrument provided with a plurality of reaction vessels for retaining reaction liquid of a sample and a reagent, the analytical apparatus being designed to perform sample analysis with respect to each of the reaction vessels, and the analytical apparatus comprising:
photometry means for irradiating each of the reaction vessels with light and receiving light traveling from the reaction vessel upon the irradiation; and
detection means for detecting a reference portion provided in the analytical instrument for enabling determination of position of a particular portion of the analytical instrument, the detection of the reference portion being performed based on result of light reception at the photometry means when the analytical instrument is irradiated with light by the photometry means.

30. The analytical apparatus according to claim 29, wherein, when the analytical instrument to be used is so designed that the reaction vessels and the reference portion are arranged on a common circle and that sample analysis is to be performed with respect to each of the reaction vessels,
the analytical apparatus further includes a controller for controlling operation to rotate the photometry means relative to the analytical instrument along the circle on which the reaction vessels are arranged, and
wherein the detection means detects the reference portion based on result of light reception at the photometry means when the analytical instrument is irradiated with light by the photometry means while the photometry means is rotated relative to the analytical instrument.

31. The analytical apparatus according to claim 30, wherein, when the analytical instrument is so designed as to perform analysis of the sample by an optical method utilizing each of the reaction vessels,
the photometry means to be used is designed to perform photometry with respect to each of the reaction vessels.

32. The analytical apparatus according to claim 31, wherein the photometry means is designed to receive light transmitted through the analytical instrument when the analytical instrument is irradiated with light.

33. The analytical apparatus according to claim 29, wherein the photometry means is designed to irradiate the analytical instrument with laser beam and receive reflected light from the analytical instrument.

34. The analytical apparatus according to claim 33, wherein the photometry means includes a semiconductor laser apparatus which includes a laser diode for irradiating the analytical instrument with laser beam and a photodiode for receiving reflected light from the analytical instrument.

35. The analytical apparatus according to claim 34, wherein the photodiode is incorporated in the semiconductor laser apparatus for monitoring output of the laser diode.

36. The analytical apparatus according to claim 35, wherein the photodiode includes a light receiving surface spreading in a direction crossing an optical axis of laser beam emitted from the semiconductor laser apparatus and is spaced from the laser diode in a direction perpendicular to the optical axis.

37. The analytical apparatus according to claim 33, wherein, in addition to the reaction vessels, the analytical instrument to be used further includes a flow path for moving a sample by causing capillary force to act on the sample, an exhaust port for exhausting gas from the flow path, and a sealing member closing the exhaust port and capable of being perforated by irradiation of laser beam;
wherein the analytical apparatus further includes a controller for controlling operation of the photometry means; and
wherein the controller is designed to control the photometry means so that laser beam from the photometry means impinges on the sealing member to perforate the sealing member and cause the flow path to communicate with outside.

38. The analytical apparatus according to claim 37, wherein the controller controls the photometry means so that output of laser beam emitted from the photometry means be larger in perforating the sealing member than in detecting the reference portion.

39. The analytical apparatus according to claim 29, wherein, when the analytical instrument to be used is in a form of a circular plate as a whole and includes a periphery provided with the reference portion and a recognizing portion utilized for determining position of a target reaction vessel and provided correspondingly to the reaction vessel,
the analytical apparatus includes an optical sensor for irradiating the periphery of the analytical instrument with light from side and receiving reflected light from the periphery of the analytical instrument.

40. The analytical apparatus according to claim 39, wherein the optical sensor is a reflective photosensor.
